# EUROPÄISCHE PATENTSCHRIFT

(11) **EP 2 202 004 B1**
(45) Veröffentlichungstag und Bekanntmachung des Hinweises auf die Patenterteilung: **26.03.2014**
(21) Anmeldenummer: 09177930.6
(22) Anmeldetag: 03.12.2009
(51) Int. Cl.: B05B 15/12, B05D 1/32, B05B 12/14, B08B 17/04

(54) **Lackiervorrichtung und Verfahren zu deren Betrieb**
Painting apparatus and corresponding method
Installation de peinture et procédé correspondant

(30) Priorität: 19.12.2008 DE 102008064043
(43) Veröffentlichungstag der Anmeldung: 30.06.2010
(73) Patentinhaber: Dürr Systems GmbH, 74321 Bietigheim-Bissingen (DE)
(72) Erfinder: Fritz, Hans-Georg, 73760 Ostfildern (DE); Holzheimer, Jens, 71732 Tamm (DE); Wieland, Dietmar, 71336 Waiblingen (DE); Herre, Frank, 71739 Oberriexingen (DE)
(74) Vertreter: Hoeger, Stellrecht & Partner Patentanwälte

(56) Entgegenhaltungen:
- WO-A1-01/36108
- DE-A1- 3 839 935
- DE-A1- 19 936 790
- DE-T2- 69 103 218
- US-A1- 2004 001 932

## Beschreibung

Die vorliegende Erfindung betrifft eine Lackiervorrichtung, welche eine Appliziereinheit zum Lackieren von Werkstücken umfasst.

Solche Lackiervorrichtungen sind aus dem Stand der Technik bekannt.

Die aus dem Stand der Technik bekannten Lackiervorrichtungen umfassen beispielsweise der Appliziereinheit in einer Förderrichtung der zu lackierenden Werkstücke räumlich nachgeordnete Trocknungsvorrichtungen zum Trocknen einer lackierten Oberfläche. Ferner sind aus dem Stand der Technik Lackiervorrichtungen bekannt, welche Vorrichtungen zum Applizieren einer Schutzschicht auf nicht zu lackierende Oberflächen aufweisen.

Die WO 01/36108 A1 und die DE 691 03 218 T2 offenbaren Lackieranlagen, mittels welchen verschiedene Beschichtungsmaterialien auf zu lackierende Werkstücke aufgebracht werden können.

Die DE 38 39 935 A1 offenbart verschiedene Materialien zur Beschichtung von Lackierkabinen.

Der vorliegenden Erfindung liegt die Aufgabe zugrunde, eine Lackiervorrichtung der eingangs genannten Art zu schaffen, welche flexibel einsetzbar und platzsparend ist und eine möglichst geringe Anzahl von Komponenten aufweist.

Diese Aufgabe wird erfindungsgemäß durch eine Lackiervorrichtung mit den Merkmalen von Anspruch 1 gelöst.

Dadurch, dass mittels der Appliziereinheit ein Strom eines von einem Lack zum Lackieren der Werkstücke verschiedenen Mediums abgebbar ist, kann mittels der Lackiervorrichtung auf einfache Art und Weise eine

Schicht auf eine nicht zu lackierende Oberfläche aufgebracht werden. Separate Beschichtungsvorrichtungen sind dadurch entbehrlich. Die Lackiervorrichtung weist somit eine geringere Anzahl von Komponenten auf.

Erfindungsgemäß ist vorgesehen, dass die Appliziereinheit eine Lackappliziereinrichtung zum Applizieren von Lack auf die zu lackierenden Werkstücke umfasst, mittels welcher das von dem Lack zum Lackieren der Werkstücke verschiedene schichtbildende Medium abgebbar ist.

Ergänzend hierzu kann vorgesehen sein, dass die Appliziereinheit zusätzlich zu der Lackappliziereinrichtung eine Mediumabgabeeinrichtung zum Abgeben des schichtbildenden Mediums umfasst.

Die Lackiervorrichtung umfasst eine Umschaltvorrichtung, mittels derer wahlweise eine Lackzuführleitung oder eine Mediumzuführleitung an die Lackappliziereinrichtung anschließbar ist.

Insbesondere kann vorgesehen sein, dass die Lackappliziereinrichtung eine Abgabeleitung zum Abgeben von Lack oder Medium umfasst, in welche wahlweise eine Lackzuführleitung oder eine Mediumzuführleitung mündet. Dadurch entfällt die Notwendigkeit, für Lack und Medium getrennte Abgabeleitungen vorzusehen.

Günstig ist es, wenn die Lackiervorrichtung einen Aufnahmebehälter umfasst, welchem zum Umschalten zwischen einem Lackabgabemodus und einem Mediumabgabemodus noch in der Abgabeleitung angeordneter Lack und/oder in der Abgabeleitung angeordnetes Medium zuführbar ist. Auf diese Weise kann verhindert werden, dass ein zu lackierendes Werkstück mit einem noch in der Abgabeleitung angeordneten schichtbildenden Medium verunreinigt wird oder dass eine mit einem schichtbildenden Medium zu beaufschlagende Fläche mit noch in der Abgabeleitung angeordnetem Lack lackiert wird.

Um eine nicht zu lackierende Oberfläche auf besonders einfache Art und Weise mit einer Schutzschicht zu versehen, ist vorgesehen, dass die nicht zu lackierende Oberfläche mittels der Appliziereinheit mit dem schichtbildenden Medium beaufschlagbar ist.

Insbesondere kann vorgesehen sein, dass mittels der Appliziereinheit eine außerhalb der Lackiervorrichtung selbst angeordnete Oberfläche, beispielsweise eine Oberfläche einer Begrenzungswand einer Lackierkabine, mit dem schichtbildenden Medium beaufschlagbar ist.

Vorzugsweise sind alle mit der Lackiervorrichtung erreichbaren Bereiche mit schichtbildendem Medium beaufschlagbar.

Eine einfache Versorgung der Lackiervorrichtung mit dem Medium ist insbesondere dann gewährleistet, wenn die Lackiervorrichtung einen Vorratsbehälter für das schichtbildende Medium umfasst.

Vorteilhafterweise umfasst die Lackiervorrichtung eine Pumpe zum Antreiben einer der Appliziereinheit zuzuführenden Lackströmung und/oder Mediumströmung.

Bei einer Ausgestaltung der Erfindung ist vorgesehen, dass mittels der Appliziereinheit außer einem Lack und dem schichtbildenden Medium auch ein Reinigungsmedium zum Reinigen einer Oberfläche, insbesondere zum Reinigen einer mit Lack-Overspray verunreinigten Oberfläche und/oder einer mittels des schichtbildenden Mediums beschichteten Oberfläche, abgebbar ist.

Vorzugsweise liegt das Reinigungsmedium als Fluid oder in Partikelform vor.

Zur Unterstützung einer manuellen Reinigung ist vorzugsweise ein automatischer Auftrag eines Reinigungsmediums oder ein Abwaschen eines manuell aufgebrachten Reinigungsmediums mittels der Lackiervorrichtung vorgesehen.

Beispielsweise kann vorgesehen sein, dass mittels der Appliziereinheit ein Hochdruckwasserstrahl zum Abreinigen einer Oberfläche abgebbar ist. Dadurch kann eine verunreinigte Fläche auf besonders einfache Art und Weise gereinigt werden. Hierzu kann an der Appliziereinheit beispielsweise ein Hochdruckreiniger angeordnet sein, welcher vorzugsweise mittels einer Bewegungseinrichtung verfahrbar, insbesondere zusammen mit der Appliziereinheit verfahrbar, ausgebildet ist.

Um eine hohe Luftfeuchtigkeit in der Umgebung der Lackiervorrichtung von vornherein zu vermeiden, kann vorgesehen sein, dass eine Reinigung mit gasförmigem Medium erfolgt.

Bei einer Ausgestaltung der Erfindung ist vorgesehen, dass das schichtbildende Medium ein schichtbildendes Material umfasst, welches einen Flüssigkeitsanteil des Lacks zum Lackieren der Werkstücke aufnimmt und mit dem Lack eine einfach abzureinigende Schicht bildet. Durch Applizieren des schichtbildenden Mediums auf eine nicht zu lackierende Oberfläche kann gewährleistet werden, dass im Betrieb der Lackiervorrichtung nicht an den Fahrzeugkarosserien anhaftende, sondern auf die nicht zu lackierende Oberfläche auftreffende Lackpartikel, sogenannter Lack-Overspray, nicht permanent an der Oberfläche anhaften, sondern einfach abreinigbar sind.

Alternativ oder ergänzend hierzu kann vorgesehen sein, dass das schichtbildende Medium eine Substanz umfasst, welche mindestens eine chemisch reaktive Gruppe aufweist, die mit dem Lack, insbesondere mit dem Lack-Overspray, reagieren kann.

Günstig ist es, wenn die mindestens eine chemisch reaktive Gruppe eine Amingruppe ist.

Besonders günstig ist es, wenn das schichtbildende Medium ein mindestens bi-funktionelles Amin umfasst.

Insbesondere dann, wenn ein Bindemittel des Lacks mindestens bi-funktionell ist, ergibt sich eine vorteilhafte Reaktion, beispielsweise unter Bildung eines Netzwerks, zwischen dem schichtbildenden Medium und dem Lack.

Beispielsweise kann eine oder mehrere der nachfolgenden Reaktionen ablaufen:
a) Reaktion eines Isocyanats mit einem Amin 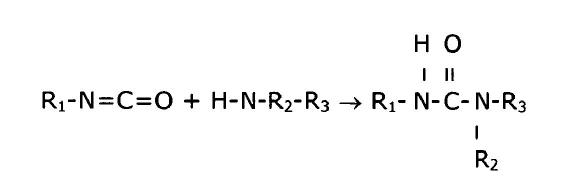
b) Reaktion eines Amins mit einem Epoxid 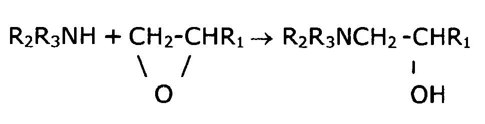
c) Reaktion eines Amins mit einer Carbonsäure

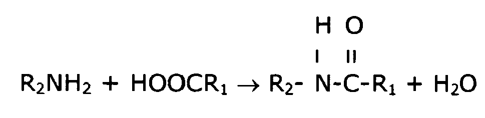

Besonders günstig ist es, wenn die schichtbildende Substanz durch Reaktion mit dem Lack von einem gelartigen Zustand in einen, insbesondere festen, filmartigen Zustand übergeht.

Als Material für einen Flächenschutz eignet sich insbesondere ein mittels der Lackiervorrichtung applizierbares Precoat-Material, welches an der damit beaufschlagten Oberfläche eine Schutzschicht bildet.

Ferner kann vorgesehen sein, dass zu schützende Oberflächen, insbesondere solche von Robotern, Verfahrachsen, Gitterrosten, etc., mittels der Appliziereinheit einmalig oder in regelmäßigen Abständen mit Fett, Vaseline, Abziehlack, einer Nanobeschichtung und/oder einer Antihaft-Beschichtung beschichtet werden.

Alternativ oder ergänzend hierzu kann vorgesehen sein, dass zur Vereinfachung oder Vermeidung der Reinigung Nanolacke, welche beispielsweise den Lotuseffekt ausnutzen, mittels der Appliziereinheit auf zu schützende Oberflächen applizierbar sind.

Ferner kann vorgesehen sein, dass mittels der Appliziereinheit ein trocknendes Medium, beispielsweise ein Gas oder ein Gasgemisch, zum Trocknen eines zuvor lackierten Werkstücks oder einer zuvor mit einem, beispielsweise wässrigen, Reinigungsmedium gereinigten Oberfläche auf das Werkstück beziehungsweise auf die gereinigte Oberfläche abgebbar ist.

Günstig ist es, wenn die Lackiervorrichtung eine Bewegungseinrichtung zum motorischen Verfahren der Appliziereinheit umfasst.

Besonders günstig ist es, wenn die Bewegungseinrichtung zum motorischen Verfahren der Appliziereinheit als ein Roboter ausgebildet ist.

Vorteilhafterweise umfasst die Lackiervorrichtung eine Steuereinrichtung zur Steuerung der Bewegungseinrichtung. Insbesondere ist dadurch ein automatischer Betrieb der Lackiervorrichtung möglich.

Die erfindungsgemäße Lackiervorrichtung eignet sich insbesondere zur Verwendung in einer Lackieranlage, welche eine Lackierkabine umfasst.

Die erfindungsgemäße Lackieranlage weist die vorstehend im Zusammenhang mit der erfindungsgemäßen Lackiervorrichtung beschriebenen Merkmale und Vorteile auf.

Insbesondere in Kombination mit einer Trockenauswaschung zur Reinigung eines mit Lack-Overspray verunreinigten Luftstroms kann vorgesehen sein, dass die Appliziereinheit der Lackiervorrichtung weitere Funktionen übernimmt, die über das Lackieren hinausgehen.

So eignet sich die Lackiervorrichtung vorzugsweise zum Applizieren einer Schutzschicht auf eine Wandfläche einer Lackierkabine, einer Fördervorrichtung und/oder einer Strömungskammer.

Eine vereinfachte Abreinigung ergibt sich insbesondere bei der Verwendung einer Kombination aus verschiedenen Medien, insbesondere aus einem Zerstäuber, welche auf verschiedene Bereiche in der Lackierkabine, zum Beispiel auf Fenster, Wände, Gitterroste, Verfahrachsen, Bodenflächen, Roboterkomponenten, die Fördervorrichtung, Bereiche unter der Gitterrostebene und/oder die Lackiervorrichtung selbst aufgebracht werden.

Vorzugsweise kann die Lackierkabine mittels der Lackiervorrichtung mit einer vollständigen oder zumindest einer teilweisen Beschichtung aus einer Abziehfolie und/oder aus Vaseline versehen werden.

Bei einer Ausgestaltung der Lackieranlage ist unterhalb der Lackierkabine ein Filter zum Reinigen von mit Lack-Overspray beaufschlagter Luft vorgesehen, dessen Filterelemente mit einer Schicht aus einem Precoat-Material versehen sind und der einen Auffangtrichter für von den Filterelementen abgereinigtes Precoat-Material umfasst. Damit bei einem Reinigungsvorgang der Lackieranlage anfallende grobe Verunreinigungen nicht in den Filter gelangen und das in dem Filter angeordnete Precoat-Material nicht übermäßig verunreinigt wird, ist vorzugsweise vorgesehen, dass an einem Einlass des Filters, welcher beispielsweise eine Engstelle für einen Luftstrom bildet, eine luftdurchlässige Filtermatte angeordnet ist, welche den Einlass des Filters verschließt.

Die luftdurchlässige Filtermatte ist beispielsweise an einem Träger angeordnet und vorzugsweise lösbar an dem Träger festgelegt. Dadurch ist ein einfacher Austausch der Filtermatte möglich.

Bei einer Weiterbildung der Erfindung ist vorgesehen, dass die Filterelemente des Filters zur Vorbeschichtung mittels der Lackiervorrichtung mit Precoat-Material beaufschlagbar sind.

Der Erfindung liegt ferner die Aufgabe zugrunde, ein Verfahren zum Betrieb einer Lackiervorrichtung bereitzustellen, welches flexibel einsetzbar und mit einer möglichst geringen Anzahl von Komponenten auf geringem Raum ausführbar ist.

Diese Aufgabe wird erfindungsgemäß durch ein Verfahren zum Betrieb einer Lackiervorrichtung gelöst, welches folgende Verfahrensschritte umfasst:
- Applizieren von Lack auf zu lackierende Werkstücke mittels einer Appliziereinheit; und
- Abgeben eines von dem Lack zum Lackieren der Werkstücke verschiedenen schichtbildenden Mediums zum Applizieren einer Schutzschicht auf eine nicht zu lackierende Oberfläche mittels der Appliziereinheit.

Dadurch, dass mittels der Appliziereinheit sowohl Lack als auch ein von dem Lack verschiedenes schichtbildendes Medium abgegeben wird, ist das Verfahren flexibel einsetzbar und mit einer geringen Anzahl von Komponenten auf geringem Raum ausführbar.

Das Verfahren weist ferner die im Zusammenhang mit der erfindungsgemäßen Lackiervorrichtung aufgeführten Vorteile auf.

Bei einer Weiterbildung der Erfindung ist vorgesehen, dass mittels des Mediums eine Oberfläche außerhalb der Lackiervorrichtung selbst beschichtet wird.

Günstig ist es, wenn zwischen dem schichtbildenden Medium und dem Lack, insbesondere zwischen dem schichtbildenden Medium und dem Lack-Overspray, eine chemische Reaktion stattfindet.

Besonders günstig ist es, wenn die schichtbildende Substanz von einem gelartigen Zustand in einen filmartigen Zustand übergeht.

Ferner können die nachfolgend aufgeführten Merkmale und Vorteile vorzugsweise Bestandteil der vorliegenden Erfindung sein:
- durch einen automatisierten Betrieb der Lackiervorrichtung ist ein verringerter Personalaufwand gewährleistet;
- durch eine vereinfachte Reinigung und/oder eine verringerte Verschmutzung der Lackieranlage ergibt sich ein geringerer Reinigungsaufwand und somit ein kostengünstigerer Betrieb der Lackieranlage;
- durch die Vermeidung starker Verschmutzungen des Precoat-Materials können Entsorgungskosten eingespart werden.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen vertikalen Querschnitt durch eine Lackieranlage mit einer an einem Lackierroboter angeordneten Appliziereinheit; und
- Fig. 2: eine schematische Seitenansicht der Appliziereinheit aus Fig. 1.

Gleiche oder funktional äquivalente Elemente sind in allen Figuren mit denselben Bezugszeichen bezeichnet.

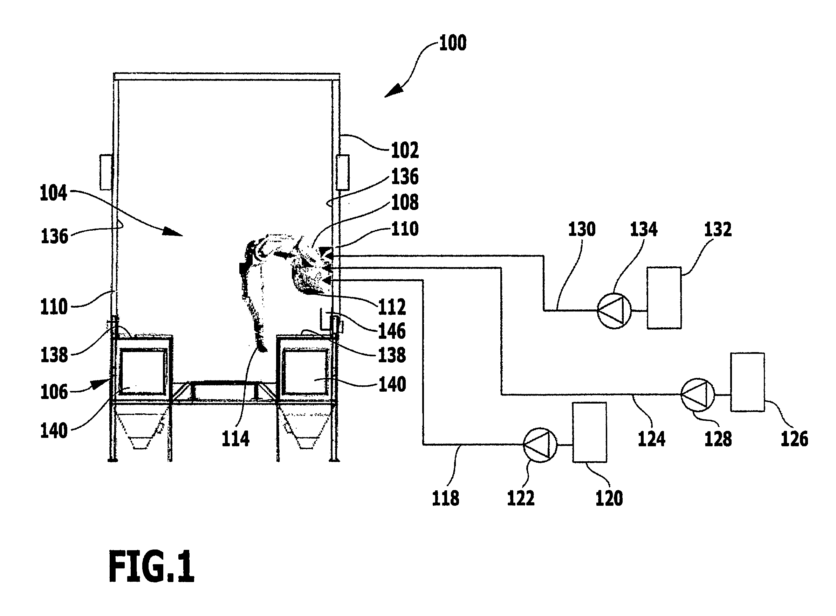

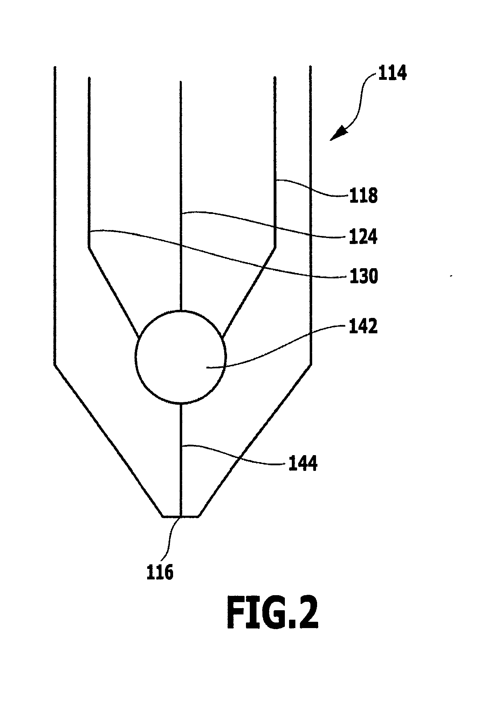

In den Fig. 1 und 2 ist eine als Ganzes mit 100 bezeichnete Lackieranlage dargestellt. Der grundsätzliche Aufbau einer solchen Lackieranlage 100 ist beispielsweise aus der DE 10 2005 048 579 A1 bekannt, auf welche insoweit Bezug genommen wird.

Die in Fig. 1 in einem Querschnitt dargestellte Lackieranlage 100 umfasst eine Lackierkabine 102 mit einem Applikationsbereich 104, ein oberhalb der Lackierkabine 102 angeordnetes (nicht dargestelltes) Plenum, durch welches der Lackierkabine 102 Luft zugeführt wird, und einen unterhalb der Lackierkabine 102 angeordneten Filterraum 106, in welchem die in der Lackierkabine 102 mit Lack-Overspray beaufschlagte Luft gereinigt wird.

Mittels einer (nicht dargestellten) Fördervorrichtung sind Fahrzeugkarosserien durch den Applikationsbereich 104 in der Lackierkabine 102 förderbar.

Zum Lackieren der Fahrzeugkarosserien in dem Applikationsbereich 104 der Lackierkabine 102 ist in der Lackierkabine 102 eine Lackiervorrichtung 108 angeordnet.

Die Lackiervorrichtung 108 umfasst einen beispielsweise an einer Seitenwand 110 der Lackierkabine 102 angeordneten Lackierroboter 112, der eine als Lackappliziereinrichtung ausgebildete Appliziereinheit 114 zum Applizieren von Lack auf die Fahrzeugkarosserien trägt.

Die Appliziereinheit 114 ist an einem beweglichen Ende des Lackierroboters 112 angeordnet. Dadurch kann eine Austrittsöffnung 116 der Appliziereinheit 114 (siehe Fig. 2) auf eine Vielzahl von Oberflächen der Fahrzeugkarosserien gerichtet werden, um die Fahrzeugkarosserien besonders einfach lackieren zu können.

Die Lackiervorrichtung 108 weist eine erste Zuleitung 118 zur Zuleitung eines ersten Lacks aus einem ersten Lackbehälter 120 zu der Appliziereinheit 114 mittels einer in der ersten Zuleitung 118 angeordneten ersten Pumpe 122 und eine zweite Zuleitung 124 zur Zuleitung eines zweiten Lacks aus einem zweiten Lackbehälter 126 zu der Appliziereinheit 114 mittels einer in der zweiten Zuleitung 124 angeordneten zweiten Pumpe 128 auf.

Somit kann für die Lackierung der Fahrzeugkarosserien mittels der Lackiervorrichtung 108 zwischen zwei unterschiedlichen Lacken gewählt werden.

Ferner kann die Austrittsöffnung 116 der Appliziereinheit 114 mittels des Lackierroboters 112 auf eine Vielzahl von nicht zu lackierenden Oberflächen der Lackieranlage 100 gerichtet werden, um dieselben mit einer Schutzschicht zu versehen.

Hierzu weist die Lackiervorrichtung 108 eine dritte Zuleitung 130 zum Zuleiten eines Mediums aus einem Mediumbehälter 132 zu der Appliziereinheit 114 auf, wobei in der dritten Zuleitung 130 eine dritte Pumpe 134 vorgesehen ist, um das Medium aus dem Mediumbehälter 132 über die dritte Zuleitung 130 der Appliziereinheit 114 zuzuführen.

Die Appliziereinheit 114 dient somit auch als Mediumabgabeeinrichtung.

Das in dem Mediumbehälter 132 angeordnete Medium ist ein von dem Lack zum Lackieren der Fahrzeugkarosserien verschiedenes Medium. Insbesondere ist das Medium ein schichtbildendes Medium.

Ein schichtbildendes Medium ist beispielsweise ein Precoat-Material, welches insbesondere Kalk, Steinmehl, Aluminiumsilikat, Aluminiumoxid, Siliziumoxid, Pulverlack und/oder ähnliches umfasst. Ferner kann das schichtbildende Medium eine Substanz umfassen, welche chemisch reaktive Gruppen, beispielsweise Amingruppen, aufweist.

Mittels der Appliziereinheit 114 ist das schichtbildende Medium insbesondere auf diejenigen Oberflächen der Lackieranlage 100 applizierbar, welche in einem Lackierbetrieb der Lackieranlage 100 mit Lack-Overspray beaufschlagt werden.

Derartige Oberflächen der Lackieranlage 100 sind insbesondere Innenseiten 136 der Seitenwände 110 der Lackierkabine 102, Oberseiten 138 von in dem Filterraum 106 angeordneten Filtervorrichtungen 140 und ein zwischen der Lackierkabine 102 und dem Filterraum 106 angeordneter (nicht dargestellter) Gitterrostboden.

Durch ein Applizieren des schichtbildenden Mediums auf im Lackierbetrieb der Lackieranlage 100 mit Lack-Overspray beaufschlagte Oberflächen haftet der Lack-Overspray nicht direkt an den Oberflächen der Lackieranlage 100, sondern an einer mittels des Mediums gebildeten Schutzschicht an oder reagiert chemisch mit derselben, so dass ein einfaches Abreinigen der Oberflächen der Lackieranlage 100 von Lack-Overspray gewährleistet ist.

Ein Abreinigen der mit Lack-Overspray verunreinigten Oberflächen der Lackieranlage 100 ist insbesondere dadurch möglich, dass die verunreinigten Oberflächen der Lackieranlage 100 mittels der Appliziereinheit 114 mit einem Reinigungsmedium beaufschlagt werden.

Nach einem Reinigungsvorgang sind die gereinigten Oberflächen der Lackieranlage 100 insbesondere bei der Verwendung von wässrigem Reinigungsmedium mittels der Appliziereinheit 114 mit einem trocknenden Medium beaufschlagbar.

Zum Umschalten zwischen einem Lackabgabemodus und einem Mediumabgabemodus der Lackiervorrichtung 108 ist eine Umschaltvorrichtung 142 vorgesehen, welche beispielsweise an der Appliziereinheit 114 angeordnet ist (siehe Fig. 2).

Mittels der Umschaltvorrichtung 142 ist eine Fluidverbindung wahlweise zwischen der ersten Zuleitung 118 und einer in die Austrittsöffnung 116 der Appliziereinheit 114 mündenden Abgabeleitung 144, zwischen der zweiten Zuleitung 124 und der Abgabeleitung 144 oder zwischen der dritten Zuleitung 130 und der Abgabeleitung 144 herstellbar.

Um zu verhindern, dass eine nicht zu lackierende Oberfläche mit Lack beaufschlagt wird oder eine zu lackierende Fahrzeugkarosserie mit, beispielsweise schichtbildendem, Medium beaufschlagt wird, umfasst die Lackiervorrichtung 108 einen Aufnahmebehälter 146, welchem beim Umschalten von einem Lackabgabemodus in einen anderen Lackabgabemodus oder in einen Mediumabgabemodus noch in der Abgabeleitung 144 angeordneter Lack und/oder beim Umschalten von einem Mediumabgabemodus in einen Lackabgabemodus oder in einen anderen Mediumabgabemodus noch in der Abgabeleitung 144 angeordnetes Medium zuführbar ist.

Um der Appliziereinheit 114 voneinander verschiedene Medien zuführen zu können, kann einerseits vorgesehen sein, dass der Mediumbehälter 132 auswechselbar ausgebildet ist.

Andererseits kann vorgesehen sein, dass weitere (nicht dargestellte) Zuleitungen von weiteren (nicht dargestellten) Mediumbehältern zu der Umschaltvorrichtung 142 führen, um dort nicht nur zwischen unterschiedlichen Lacken aus dem ersten Lackbehälter 120 und dem zweiten Lackbehälter 126 und einem Medium aus dem Mediumbehälter 132, sondern zusätzlich aus mehreren Mediumbehältern mit verschiedenen Medien wählen zu können.

Die vorstehend beschriebene Lackieranlage 100 funktioniert wie folgt:

Vor dem Einbringen einer Fahrzeugkarosserie mittels der Fördervorrichtung in den Applikationsbereich 104 der Lackierkabine 102 der Lackieranlage 100 wird auf die im Lackierbetrieb der Lackieranlage 100 mit Lack-Overspray beaufschlagten Oberflächen der Lackieranlage 100 eine Schutzschicht aufgebracht.

Hierzu wird die Austrittsöffnung 116 der Appliziereinheit 114 der Lackiervorrichtung 108 auf eine mit schichtbildendem Medium zu beaufschlagende Oberfläche, beispielsweise die Innenseiten 136 der Seitenwände 110 der Lackierkabine 102, gerichtet.

Die Umschaltvorrichtung 142 wird in einen Mediumabgabemodus versetzt, in welchem die dritte Zuleitung 130 mit der Abgabeleitung 144 der Appliziereinheit 114 in Fluidverbindung steht, um der Austrittsöffnung 116 der Appliziereinheit 114 und somit den Innenseiten 136 der Seitenwände 110 der Lackierkabine 102 schichtbildendes Medium aus dem Mediumbehälter 132 zuzuführen.

Mittels der dritten Pumpe 134 wird Medium aus dem Mediumbehälter 132 angesaugt und über die dritte Zuleitung 130 der Umschaltvorrichtung 142 der Appliziereinheit 114 zugeführt.

Anschließend werden weitere zu schützende Oberflächen, beispielsweise die Oberseiten 138 der Filtervorrichtungen 140 oder der (nicht dargestellte) Gitterrostboden der Lackierkabine 102, mit dem schichtbildenden Medium beaufschlagt, so dass sich auf den im Lackierbetrieb der Lackieranlage 100 möglicherweise mit Lack-Overspray beaufschlagten Oberflächen eine Schutzschicht ausbildet.

Nach Abschluss dieser Verfahrensschritte wird mittels der Umschaltvorrichtung 142 die Fluidverbindung zwischen der dritten Zuleitung 130 und der Abgabeleitung 144 getrennt und eine Fluidverbindung beispielsweise zwischen der ersten Zuleitung 118 und der Abgabeleitung 144 hergestellt.

Um das noch in der Abgabeleitung 144 angeordnete Medium dem Aufnahmebehälter 146 zuzuführen, wird die Austrittsöffnung 116 in einen Innenraum des Aufnahmebehälters 146 gerichtet und der Appliziereinheit 114 mittels der ersten Pumpe 122 solange Lack aus dem ersten Lackbehälter 120 zugeführt, bis die Abgabeleitung 144 kein Medium mehr enthält.

Alternativ oder ergänzend hierzu kann vorgesehen sein, dass die Abgabeleitung 144 zwischen einem Abgeben von Medium und einem Abgeben von Lack mit einem Spülmittel gespült wird.

Eine mittels der Fördervorrichtung in die Lackierkabine 102 geförderte Fahrzeugkarosserie wird dann auf bekannte Art und Weise mittels der an dem Lackierroboter 112 angeordneten Appliziereinheit 114 der Lackiervorrichtung 108 lackiert.

Hierbei gelangt der aus der Austrittsöffnung 116 austretende Lack nicht vollständig auf die zu lackierende Fahrzeugkarosserie. Vielmehr bildet sich Lack-Overspray, welcher sich an nicht zu lackierenden Oberflächen der Lackieranlage 100 niederschlägt.

Durch die zuvor mittels der Appliziereinheit 114 der Lackiervorrichtung 108 an diesen Flächen angeordnete Schutzschicht haftet der Lack-Overspray nicht direkt an den Oberflächen der Lackieranlage 100, sondern an der mittels des schichtbildenden Mediums gebildeten Schutzschicht an oder reagiert chemisch mit derselben.

Nach einem oder mehreren Lackiervorgängen und dem Entfernen der zuletzt in der Lackierkabine 102 lackierten Fahrzeugkarosserie aus der Lackierkabine 102 erfolgt eine einfache Abreinigung der in der Lackieranlage 100 mit Lack-Overspray beaufschlagten Flächen dadurch, dass die mittels des schichtbildenden Mediums gebildete Schutzschicht samt dem daran anhaftenden Lack-Overspray von den Oberflächen der Lackieranlage 100 entfernt wird.

Dies kann beispielsweise durch eine manuelle Abreinigung erfolgen.

Alternativ oder ergänzend hierzu kann mittels der Appliziereinheit 114 der Lackiervorrichtung 108 eine automatische Abreinigung erfolgen. Der Mediumbehälter 132, welcher das schichtbildende Material enthält, wird hierzu durch einen anderen Mediumbehälter 132 ersetzt, welcher ein, beispielsweise wässriges, Reinigungsmedium enthält.

Nach einem Umschaltvorgang an der Umschaltvorrichtung 142 zum Herstellen einer Fluidverbindung zwischen der dritten Zuleitung 130 und der Abgabeleitung 144 werden die zuvor mit schichtbildendem Medium beaufschlagten Oberflächen der Lackieranlage 100 nunmehr mit dem Reinigungsmedium beaufschlagt, wodurch die mittels des schichtbildenden Mediums gebildete Schutzschicht, welche Lack-Overspray aufgenommen hat, von den Oberflächen der Lackieranlage 100 entfernt wird.

Das Material der mit Lack-Overspray verunreinigten Schutzschicht wird anschließend entweder manuell oder mittels (nicht dargestellten) Förderbändern aus der Lackieranlage 100 entfernt.

Nach dem Reinigungsvorgang wird der das Reinigungsmedium enthaltende Mediumbehälter 132 durch einen ein trocknendes Medium, beispielsweise ein gasförmiges Medium, enthaltenden Mediumbehälter 132 ersetzt, und die abgereinigten Oberflächen der Lackieranlage 100 werden mittels der Appliziereinheit 114 mit dem trocknenden Medium beaufschlagt.

Sobald die gereinigten Oberflächen der Lackieranlage 100 trocken sind, wird der Mediumbehälter 132, welcher das trocknende Medium beinhaltet, durch den Mediumbehälter 132, welcher das schichtbildende Medium beinhaltet, ersetzt.

Auf diese Weise ist die Lackieranlage 100 in ihren Ausgangszustand zurückversetzt, so dass ein weiterer Beschichtungsvorgang zur Vorbereitung des Lackierbetriebs der Lackieranlage 100 gestartet werden kann.

Dadurch, dass mittels der Appliziereinheit ein Strom eines von einem Lack zum Lackieren der Werkstücke verschiedenen schichtbildenden Mediums zum Applizieren einer Schicht auf eine Oberfläche abgebbar ist, ist die Lackiervorrichtung flexibel einsetzbar und platzsparend und weist eine geringe Anzahl von Komponenten auf.

## Patentansprüche

1. Lackiervorrichtung, umfassend eine Appliziereinheit (114) zum Lackieren von Werkstücken,
**dadurch gekennzeichnet,**
**dass** mittels der Appliziereinheit (114) ein Strom eines von einem Lack zum Lackieren der Werkstücke verschiedenen schichtbildenden Mediums zum Applizieren einer Schutzschicht auf eine nicht zu lackierende Oberfläche abgebbar ist,
wobei die Appliziereinheit (114) eine Lackappliziereinrichtung zum Applizieren von Lack auf die zu lackierenden Werkstücke und eine Umschaltvorrichtung (142) umfasst,
wobei mittels der Lackappliziereinrichtung das von dem Lack zum Lackieren der Werkstücke verschiedene schichtbildende Medium abgebbar ist, und
wobei mittels der Umschaltvorrichtung (142) wahlweise eine Lackzuführleitung (118, 124) oder eine Mediumzuführleitung (130) an die Lackappliziereinrichtung anschließbar ist.

2. Lackiervorrichtung nach Anspruch 1, **dadurch gekennzeichnet, dass** mittels der Appliziereinheit (114) eine außerhalb der Lackiervorrichtung (108) selbst angeordnete Oberfläche (136, 138) mit dem schichtbildenden Medium beaufschlagbar ist.

3. Lackiervorrichtung nach einem der Ansprüche 1 oder 2, **dadurch gekennzeichnet, dass** die Lackiervorrichtung (108) einen Vorratsbehälter (132) für das schichtbildende Medium umfasst.

4. Lackiervorrichtung nach einem der Ansprüche 1 bis 3, **dadurch gekennzeichnet, dass** die Lackiervorrichtung (108) eine Pumpe (122, 128, 134) zum Antreiben einer der Appliziereinheit (114) zuzuführenden Lackströmung und/oder Mediumströmung umfasst.

5. Lackiervorrichtung nach einem der Ansprüche 1 bis 4, **dadurch gekennzeichnet, dass** die Lackiervorrichtung (108) eine Bewegungseinrichtung (112) zum motorischen Verfahren der Appliziereinheit (114) umfasst.

6. Lackiervorrichtung nach Anspruch 5, **dadurch gekennzeichnet, dass** die Bewegungseinrichtung (112) zum motorischen Verfahren der Appliziereinheit (114) als ein Roboter ausgebildet ist.

7. Lackiervorrichtung nach einem der Ansprüche 5 oder 6, **dadurch gekennzeichnet, dass** die Lackiervorrichtung (108) eine Steuereinrichtung zur Steuerung der Bewegungseinrichtung (112) umfasst.

8. Lackieranlage, umfassend eine Lackierkabine (102) und eine Lackiervorrichtung (108) nach einem der Ansprüche 1 bis 7.

9. Verfahren zum Betrieb einer Lackiervorrichtung (108), **gekennzeichnet durch** folgende Verfahrensschritte:
- Applizieren von Lack auf zu lackierende Werkstücke mittels einer Appliziereinheit (114); und
- Abgeben eines von dem Lack zum Lackieren der Werkstücke verschiedenen schichtbildenden Mediums zum Applizieren einer Schutzschicht auf eine nicht zu lackierende Oberfläche mittels der Appliziereinheit (114).

10. Verfahren nach Anspruch 9, **dadurch gekennzeichnet, dass** mittels des schichtbildenden Mediums eine Oberfläche (136, 138) außerhalb der Lackiervorrichtung (108) selbst beschichtet wird.

11. Verfahren nach einem der Ansprüche 9 oder 10, **dadurch gekennzeichnet, dass** zwischen dem schichtbildenden Medium und dem Lack eine chemische Reaktion stattfindet.

12. Verfahren nach Anspruch 11, **dadurch gekennzeichnet, dass** die chemische Reaktion zwischen einer eine Amingruppe aufweisenden Substanz des schichtbildenden Mediums und dem Lack stattfindet.

13. Verwendung einer Lackiervorrichtung (108), umfassend eine Appliziereinheit (114) zum Lackieren von Werkstücken, mittels welcher ein Strom eines von einem Lack zum Lackieren der Werkstücke verschiedenen schichtbildenden Mediums zum Applizieren einer Schutzschicht auf eine nicht zu lackierende Oberfläche abgebbar ist, insbesondere eine Lackiervorrichtung (108) nach einem der Ansprüche 1 bis 7,
zum Applizieren einer mittels eines schichtbildenden Mediums gebildeten Schutzschicht auf eine nicht zu lackierende Oberfläche,
wobei das schichtbildende Medium eine Substanz umfasst, welche mindestens eine chemisch reaktive Gruppe aufweist, die mit dem Lack reagieren kann.

14. Verwendung nach Anspruch 13, **dadurch gekennzeichnet, dass** mindestens eine chemisch reaktive Gruppe eine Amingruppe ist.

## Claims

1. Painting device, comprising an application unit (114) for painting workpieces, **characterised in that** a stream of a layer-forming medium that is different from a paint for painting the workpieces is dispensable by means of the application unit (114) to apply a protective layer to a surface that is not to be painted, wherein the application unit (114) comprises a paint application mechanism to apply paint to the workpieces to be painted and a switch-over device (142), wherein the layer-forming medium that is different from the paint for painting the workpieces is dispensable by means of the paint application mechanism, and wherein a paint feed line (118, 124) or a medium feed line (130) is selectively connectable to the paint application mechanism by means of the switch-over device (142).

2. Painting device according to claim 1, **characterised in that** the application unit (114) is configurable to apply the layer-forming medium to a surface (136, 138) arranged outside the painting device (108) itself.

3. Painting device according to either of claims 1 or 2, **characterised in that** the painting device (108) comprises a storage container (132) for the layer-forming medium.

4. Painting device according to any one of claims 1 to 3, **characterised in that** the painting device (108) comprises a pump (122, 128, 134) to drive a paint flow and/or medium flow to be fed to the application unit (114).

5. Painting device according to any one of claims 1 to 4, **characterised in that** the painting device (108) comprises a movement mechanism (112) for the motorised movement of the application unit (114).

6. Painting device according to claim 5, **characterised in that** the movement mechanism (112) for the motorised movement of the application unit (114) is configured as a robot.

7. Painting device according to either of claims 5 or 6, **characterised in that** the painting device (108) comprises a control mechanism to control the movement mechanism (112).

8. Painting facility, comprising a painting booth (102) and a painting device (108) according to any one of claims 1 to 7.

9. Method for operating a painting device (108), **characterised by** the following method steps:
- applying paint to workpieces to be painted by means of an application unit (114); and
- dispensing a layer-forming medium that is different from the paint for painting the workpieces to apply a protective layer to a surface that is not to be painted by means of the application unit (114).

10. Method according to claim 9, **characterised in that** a surface (136, 138) outside the painting device (108) itself is coated by means of the layer-forming medium.

11. Method according to either of claims 9 or 10, **characterised in that** a chemical reaction takes place between the layer-forming medium and the paint.

12. Method according to claim 11, **characterised in that** the chemical reaction takes place between a substance of the layer-forming medium having an amine group and the paint.

13. Use of a painting device (108), comprising an application unit (114) to paint workpieces, by means of which a stream of a layer-forming medium that is different from a paint for painting the workpieces is dispensable to apply a protective layer to a surface that is not to be painted, in particular a painting device (108) according to any one of claims 1 to 7, to apply a protective layer formed by means of a layer-forming medium to a surface that is not to be painted, the layer-forming medium comprising a substance having at least one chemically reactive group, which can react with the paint.

14. Use according to claim 13, **characterised in that** at least one chemically reactive group is an amine group.

## Revendications

1. Dispositif de peinture, comprenant une unité d'application (114) servant à peindre des pièces à usiner,
**caractérisé en ce**
**qu'**un flux d'un milieu formant une couche autre qu'une peinture servant à peindre les pièces à usiner peut être délivré au moyen de l'unité d'application (114) afin d'appliquer une couche de protection sur une surface ne devant pas être peinte,
l'unité d'application (114) comprenant un système d'application de peinture servant à appliquer de la peinture sur les pièces à usiner devant être peintes et un dispositif de commutation (142),
le milieu formant une couche autre que la peinture servant à peindre les pièces à usiner pouvant être délivré au moyen du système d'application de peinture, et
au choix une conduite d'amenée de peinture (118, 124) ou une conduite d'amenée de milieu (130) pouvant être raccordée au système d'application de peinture au moyen du dispositif de commutation (142).

2. Dispositif de peinture selon la revendication 1, **caractérisé en ce qu'**une surface (136, 138) disposée en dehors du dispositif de peinture (108) lui-même peut être soumise à l'action du milieu formant une couche au moyen de l'unité d'application (114).

3. Dispositif de peinture selon l'une quelconque des revendications 1 ou 2, **caractérisé en ce que** le dispositif de peinture (108) comprend un réservoir (132) pour le milieu formant une couche.

4. Dispositif de peinture selon l'une quelconque des revendications 1 à 3, **caractérisé en ce que** le dispositif de peinture (108) comprend une pompe (122, 128, 134) servant à entraîner un écoulement de peinture et/ou un écoulement de milieu devant être amené à l'unité d'application (114).

5. Dispositif de peinture selon l'une quelconque des revendications 1 à 4, **caractérisé en ce que** le dispositif de peinture (108) comprend un système de déplacement (112) servant à déplacer de manière motorisée l'unité d'application (114).

6. Dispositif de peinture selon la revendication 5, **caractérisé en ce que** le système de déplacement (112) servant à déplacer de manière motorisée l'unité d'application (114) est réalisé sous la forme d'un robot.

7. Dispositif de peinture selon l'une quelconque des revendications 5 ou 6, **caractérisé en ce que** le dispositif de peinture (108) comprend un système de commande servant à commander le système de déplacement (112).

8. Installation de peinture, comprenant une cabine de peinture (102) et un dispositif de peinture (108) selon l'une quelconque des revendications 1 à 7.

9. Procédé servant à faire fonctionner un dispositif de peinture (108), **caractérisé par** les étapes de procédé suivantes comprenant:
- appliquer de la peinture sur des pièces à usiner devant être peintes au moyen d'une unité d'application (114) ; et
- délivrer un milieu formant une couche autre que la peinture servant à peindre les pièces à usiner afin d'appliquer une couche de protection sur une surface ne devant pas être peinte au moyen de l'unité d'application (114).

10. Procédé selon la revendication 9, **caractérisé en ce qu'**une surface (136, 138) est enduite en dehors du dispositif de peinture (108) lui-même au moyen du milieu formant une couche.

11. Procédé selon l'une quelconque des revendications 9 ou 10, **caractérisé en ce qu'**une réaction chimique a lieu entre le milieu formant une couche et la peinture.

12. Procédé selon la revendication 11, **caractérisé en ce que** la réaction chimique a lieu entre une substance, présentant un groupe amine, du milieu formant une couche et la peinture.

13. Utilisation d'un dispositif de peinture (108), comprenant une unité d'application (114) servant à peindre des pièces à usiner, au moyen de laquelle un flux d'un milieu formant une couche autre que la peinture servant à peindre les pièces à usiner peut être délivré afin d'appliquer une couche de protection sur une surface ne devant pas être peinte, comprenant en particulier un dispositif de peinture (108) selon l'une quelconque des revendications 1 à 7,
afin d'appliquer une couche de protection formée au moyen d'un milieu formant une couche sur une surface ne devant pas être peinte,
le milieu formant une couche comprenant une substance présentant au moins un groupe chimiquement réactif, qui peut réagir avec la peinture.

14. Utilisation selon la revendication 13, **caractérisée en ce qu'**au moins un groupe chimiquement réactif est un groupe amine.
